# EUROPEAN PATENT APPLICATION

(11) **EP 1 014 018 A2**
(43) Date of publication of application: **28.06.2000**
(21) Application number: 99124707.3
(22) Date of filing: 11.12.1999
(51) Int. Cl.: F25D 31/00

(54) **Vertical plate freezer**

(30) Priority: 22.12.1998 DK 171998
(71) Applicant: Dybvad Stal Industri A/S, 9352 Dybvad (DK)
(72) Inventor: Soerensen, Erik Peter Villum, 9270 Klarup (DK)
(74) Representative: Olsen, Peter Vestergaard

(57) **Abstract**

The invention concerns a vertical plate freezer for freezing foodstuffs, e.g. freezing fish on board a fishing vessel. The plate freezer has forks (7) provided with lower and rear coverings (10,11). The forks (7) have a toe (40) with a contact surface facing slantingly upwards and which can abut on a contact plate (17) with a contact surface facing slantingly downward so that water may easily run off the slantingly downward facing contact surface. The contact surface is preferably made of thermally insulating material. The coverings are fastened to support members (8,9) by means of transition elements (18) made of a thermally insulating material, so that the coldness from the coverings (10,11) is not conducted to the support members (8,9).

## Description

The present invention relates to a vertical plate freezer comprising a plurality of forks each having rear and lower coverings delimiting a freezing chamber, the forks capable of being displaced between a lifted position and a lowered position in connection with filling the chamber with foodstuffs for freezing and removing the frozen foodstuffs, the plate freezer also comprising side coverings capable of being displaced mutually sideways in connection with freezing and removing the foodstuffs, where the forks in the lowered position rest on an underlying beam, where a front, lower carrying beam has a contact surface, where the forks each have a toe at the front, and where the forks are supported at the front by the toe resting on the contact surface on the carrying beam.

Such a vertical plate freezer is disclosed in GB 2 159 933 A. Vertical plate freezers are used for instance on board fishing vessels for freezing caught fish immediately after the catch. In the following, such freezers will be used as example of vertical plate freezers without limitation to other applications of plate freezers according to the invention.

The plate freezer functions by the fish being frozen into vertical blocks in freezing chamber in the plate freezer. The fish are filled into individual freezing chambers of between 50 cm and 150 cm of height and length, and of between 5 cm and 15 cm in thickness. Other dimensions may be used for other kinds of plate freezers. The freezing chambers are formed between juxtaposed side coverings consisting of hollow aluminium plates where a hollow in the aluminium plates is designed to contain a refrigerant. By means of forks there is also formed lower coverings and rear coverings extending between the side coverings. The forks may be displaced between a lifted position and a lowered position between the side coverings.

The freezing chambers are formed in the lowered position of the forks, and fish may be poured down between the side coverings. The fish are then frozen into blocks the size of which depends on the size of the freezing chamber. After the fish having been frozen into blocks, the side coverings are displaced a small distance sideways and away from each other so that the ice blocks are released from the side coverings. Then the forks are lifted so that the blocks of fish are displaced upwards away from the freezing chamber between the side coverings. The blocks of fish may then be displaced forward or upwards, manually or automatically, until they are free of the forks, and thereafter be transported to a cold store for continued storage.

In connection with freezing of the fish and subsequent release of the blocks of frozen fish there may arise problems with unintended ice formation at different places on the plate freezer. Ice formation at other places than in the freezing chambers implies an unnecessary large energy loss, but also implies it being difficult to displace the individual displaceable elements of the plate freezer or bring them into abutment with each other. Inter alia ice may be formed between the toe and the contact surface on the carrying beam. This means that it may be necessary to stop the running of the plate freezer in order to defrost plate freezer before the plate freezer can function again. The problem of ice formation is particularly pronounced when the atmospheric humidity is great, like on fishing vessels in tropical and subtropical regions.

It is the purpose of the present invention to provide means for minimizing the risk of interruption of working of the plate freezer because of unintended ice formations.

This purpose is achieved with a plate freezer of the kind indicated in the introduction, which is peculiar in that the contact surface on the front, lower carrying beam is bevelled so that the contact surface extends from a higher level and downwards to a lower level, that a contact surface on the toe of the forks is bevelled in such a way that the toe extends from a lower level to a higher level, and that the bevelling on the carrying beam and the bevelling on the toe are extending correspondingly.

By providing a bevelling on the carrying beam and a corresponding bevelling on the toe of the forks, a possible ice formation on the carrying beam will be minimised in that possible water will run off the contact surface of the carrying beam and will not form ice. The risk of fork and contact surface on the carrying beam freezing together is thereby reduced.

As indicated in claim 2, it is preferred that hydraulic pipes for supplying hydraulic pressure with a hydraulic motor to a number of hydraulic cylinders for displacing the forks extend under the lower coverings, and that the hydraulic pipes extend immediately under the contact surface on the front, lower carrying beam.

Hydraulic pipes for a hydraulic motor for displacing the forks between the lifted position and the lowered position and for displacing the side coverings will have a certain elevated temperature partly because of the hydraulic oil being stored in a vessel situated in a place with higher temperature than the plate freezer and partly because of the pressure established in the hydraulic pipes, and thereby the mechanical work and friction created by the pressure. By letting the hydraulic pipes run immediately under the contact surface of the front beam, the heat from the hydraulic pipes will further contribute to keep the contact surface of the front carrying beam free from ice.

When at the same time letting the contact surface be made of a material like Etronax® with a very small coefficient of friction in relation to water and with a high thermal insulating ability, water and possible formed ice will have a still further tendency to run off.

In a preferred embodiment of the plate freezer according to the invention, the forks comprise support members, where at least the lower coverings, preferably both the lower covering and the rear coverings, are fastened to a support member so that they face the freezing chamber, that the forks also comprise a transition element disposed between the support member and the coverings which are fastened to and mutually connected through the transition element, and that the transition element is made of a thermally insulating material, preferably plastic, more preferably high density polyethylene (PE-HD).

The provision of a transition element between the support member for the forks and the rear and lower coverings cause that cold from the coverings facing the freezing chambers is only conducted to the support member to a very small extent.

By letting the contact surface on the toe of the fork be formed on the transition element, the tendency of ice formation on the toe will be considerably reduced as the transition element is made of insulating material.

In a preferred embodiment the plate freezer is peculiar in that contact surface on the front carrying beam is made of a thermally insulating material, preferably plastic, more preferably Etronax® or high density polyethylene (PE-HD).

In a further, preferred embodiment of the plate freezer according to the invention, the forks comprise rear support member having an I-shaped or a T-shaped cross section, where a fork holder is fastened to a chassis of the plate freezer and provided with a groove, and that one part of the transverse flange on the I-shaped or T-shaped cross section of the rear support member engages the groove in the fork holder.

A fork holder, which may be made of a thermally insulating material, will contribute to ensure that the forks can be displaced between the lifted position and the lowered position. When the forks are in the lifted position, the toe of the forks will be located opposite to an edge plate forming a transition from the toe and away from the plate freezer, e.g. when the blocks of frozen fish is moved away from the fork and away from the plate freezer and to a cold store. By providing the apparatus with a fork holder there is no risk of interrupting the running of the plate freezer due to defrosting because the toe freeze to the edge plate when the blocks are moved from the forks and forward over the edge plate. The forks are displaced in guides between the lowered position and the lifted position with a necessary clearance in the guides. Without the use of fork holder there will be a risk of the forks being pulled forward toward the edge plate when the blocks of frozen fish are pulled away from the forks, and then there will be a risk that ice formation between the toe of the forks and the edge plate could freeze the toe to the edge plate.

Embodiments of the invention will now be described in more detail with reference to the accompanying drawing where
- Fig. 1: is a vertical section through a plate freezer according to an embodiment of the invention,
- Fig. 2: shows an enlargement of the detail encircled at the top of Fig. 1,
- Fig. 3: shows a section on the line III-III on Fig. 1 as an enlarged detail,
- Fig. 4: is a perspective view from behind of a fork in the plate freezer,
- Fig. 5: is an enlargement of a detail from the plate freezer indicated with circle on Fig. 4, and
- Fig. 6: shows an enlargement of the detail encircled at the bottom of Fig. 1.

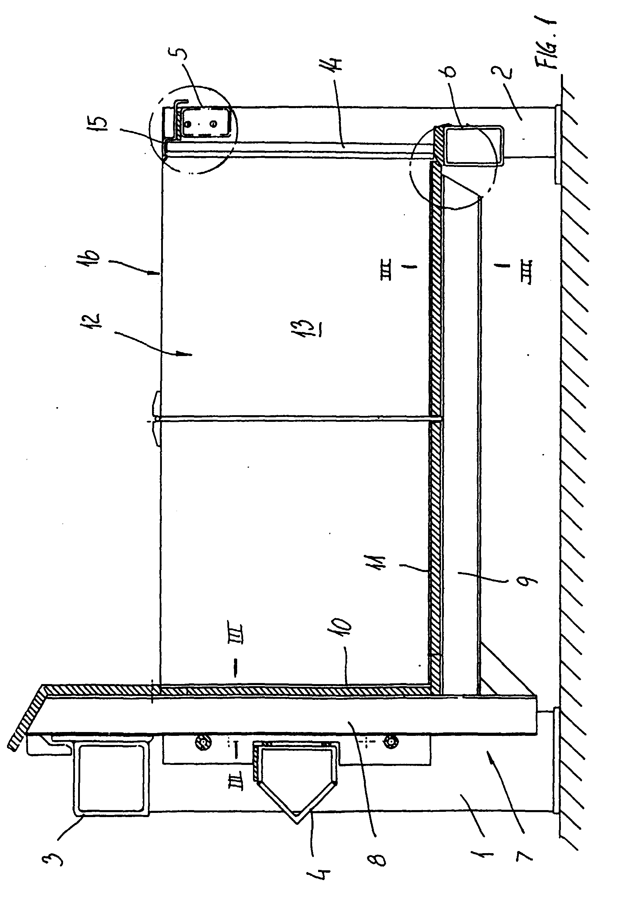

Fig. 1 is a section through an embodiment of a vertical plate freezer according to the invention. The plate freezer comprises a chassis with rear legs 1 and front legs 2. Perpendicularly to the plane of the paper carrying beams 3,4,5,6 extend between the legs 1,2. The plate freezer comprises forks 7 with a horizontal support member 8 and a vertical support member 9 which are mutually fixed. The horizontal support member 9 extends from the vertical support member 8 and forward toward a front lower carrying beam 6. The vertical support member 8 extends from the horizontal support member 9 and upwards.

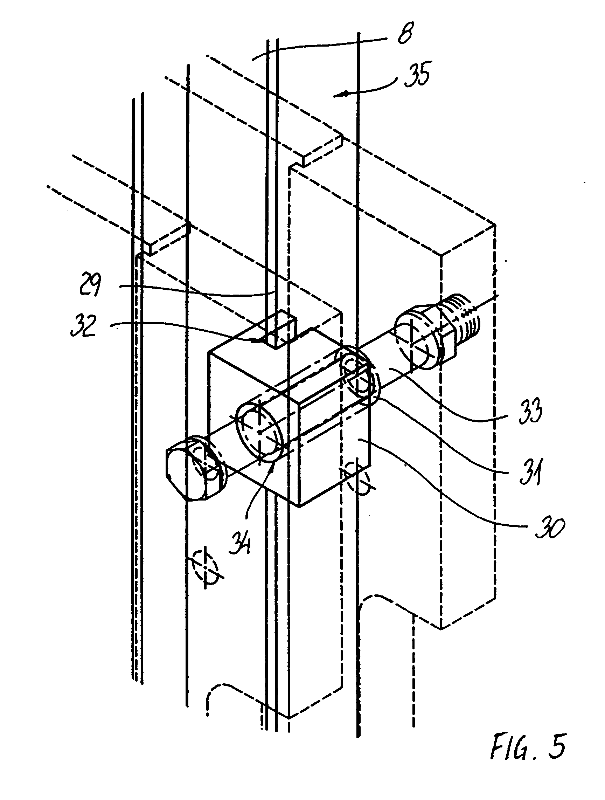

The forks 7 further comprises rear coverings 10 and lower coverings 11 which are fastened to the vertical and horizontal support elements 8,9. The coverings 10,11 constitute a part of the covering for freezing chambers 12 formed between coverings 10,11 and between cooling plates 13 constituting the real cooling means of the plate freezer. The cooling plates 13 extend outward in interspaces between the forks (see Fig. 5) and upward in relation to the forks 7. The cooling plates 13 are hollow so that a refrigerant may be conducted into the cooling plates. Besides, the freezing chambers 12 are delimited by a front covering 14, and the freezing chambers are open upwards.

The forks 7 are capable to be lifted so that the lower covering 11 is at level with or above an upper, front edge plate 15 on the plate freezer. Lifting of the forks 7 takes place when e.g. fish have been frozen into blocks in the freezing chambers 12 after being laid into the chambers 12 which, as mentioned, are delimited by the rear and lower coverings 10,11, by the cooling plates 13 and by the front covering 14. The blocks of frozen fish may be taken out of the freezer when the forks 7 are lifted so that the lower covering 11 is at level with or above an upper edge 16 of the cooling plates constituting the side coverings, and, as mentioned, when the lower covering 11 is at level with or above the front, upper edge plate 15 of the plate freezer.

At the rear, the plate freezer is provided with a central carrying beam 4 constituting a part of the chassis. The central carrying beam 4 is inter alia intended for fastening auxiliary equipment (not shown) on the chassis of the plate freezer, like hoses conducting refrigerant into the cooling plates 13. The upper side of the central carrying beam is sloping so that water possibly collected on the carrying beam 4 is led off the carrying beam. This is especially of importance for the central carrying beam because hoses with refrigerant are fastened to this carrying beam, which is therefore cooled more than the other carrying beams.

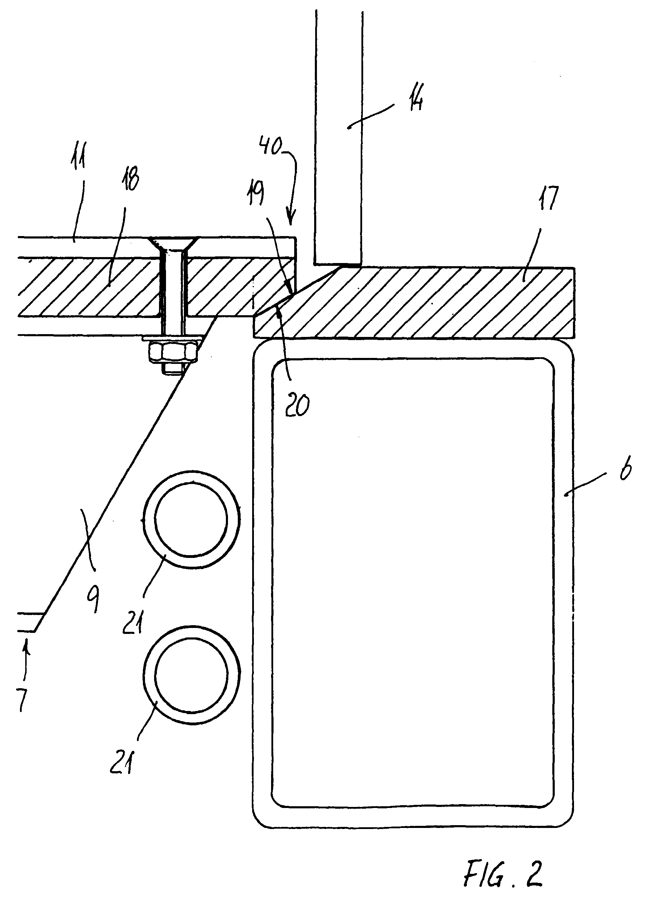

Fig. 2 shows an enlarged detail of the plate freezer shown in Fig. 1. The detail shows abutment between a toe 40 which is a projection on a fork 7, and a contact plate 17 provided on the front, lower carrying beam 6. The toe 40 on the fork 7 shows the lower support member 9 and the lower covering 11. The lower support member 9 and the lower covering 11 are mutually connected by means of a transition element 18 and are mutually fastened by means of screw and nut as shown. The abutment between the toe 40 on the fork 7 and the lower carrying beam 6 is established between a contact surface 19 on the contact plate 17 and a contact surface 20 on the transition element 18. The contact surface 19 on the contact plate 17 extends slantingly to the rear and downward as seen in direction toward the toe of the fork 7, and the contact surface 20 on the toe 40 of the fork extends correspondingly forward and upward as seen in direction toward the carrying beam 6.

By forming the contact surface 19 on the contact plate 17 so that it extends slantingly downward there is achieved the advantage that the water which possibly is collected on the contact surface 19 will run off the contact surface 19. This implies that ice cannot be formed on the contact surface 19 because the water has run off the contact surface 19 before the water may freeze into ice. The transition element 18 between the support member 9 and the covering 11 on the fork 7 and the contact plate 17 on the carrying beam 6 are made of a thermally insulating material like plastic. This further contributes to preventing ice formation on the contact surfaces 19,20.

Pipes 21 with hydraulic oil for hydraulic cylinders (not shown) for inter alia lifting and lowering the forks 7 are mounted on the carrying beam 6 immediately below the contact surface 20 on the toe of the forks 7 and the contact surface 19 on the contact plate 17 on the carrying beam 6. The hydraulic oil in the pipes will have a relatively high temperature partly because the hydraulic oil is stored and comes from a vessel placed at a higher ambient temperature than the plate freezer, and partly because the hydraulic oil is supplied with heat from fluid and mechanical friction in hydraulic pumps, valves and pistons. The heat form the hydraulic oil will be conducted to the hydraulic pipes 21 and then be conducted from the pipes 21 and rise upwards toward the contact surface 20 on the to of the forks 7 and the contact surface 19 on the contact plate 17. This will further contribute to keeping the plant free from ice formation.

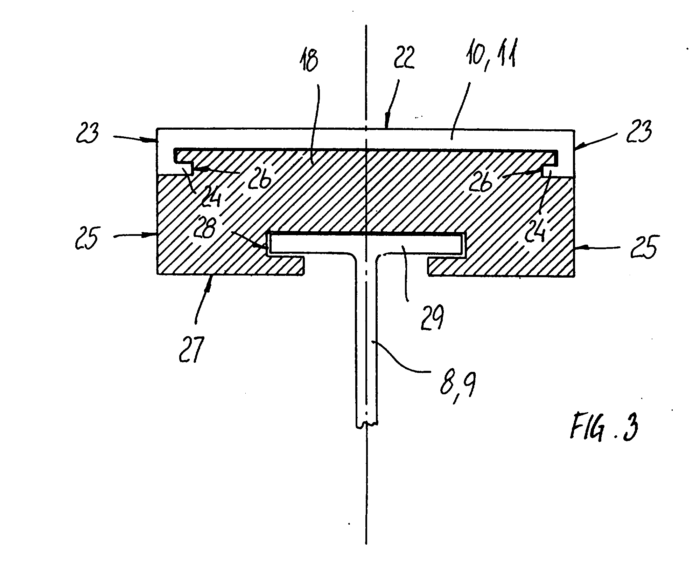

Fig. 3 shows a section through the forks 7 transversely of the longitudinal horizontal extension forward and the vertical extension upwards, respectively. The figure shows a part of the vertical support member 8, alternatively the horizontal support member 9, the rear covering 10, alternatively the lower covering 11, and the transition element 18 between the support member 8,9 and the covering 10,11. The support member 8,9 is preferably made of steel and the covering 10,11 is preferably made of aluminium. The covering 10,11 form, as mentioned earlier, a part of the limitation of the freezing chamber (see Fig. 1) and will thus have the same temperature as the block of frozen fish. By connecting the support member 8,9 and the covering 10,11 with each other by means of the transition element 18 there maybe established a thermal insulation between the covering 10,11 and the support member 8,9, so that the support member 8,9 do not get the same temperature as the frozen fish. This reduces the risk of the ice formation on the support member 8,9 and thereby also reduces the energy consumption for cooling the support member 8,9.

The covering 10,11 has a an outer side 22 facing the freezing chamber (see Fig. 1) and has sides 23 from which flanges 24 extend inwards. The transition element 18 is provided with two first grooves 26 at sides 25. The flanges 24 on the covering 10,11 are attached to the transition element 18 by being displaced longitudinally, perpendicularly to the plane of the paper in such a way that the flanges 24 run in the first grooves 26 in the transition element 18. The covering 10,11 is thereby held fast to the transition element 18. The support member 8,9 has an I-shaped cross section of which only half is shown in the figure. The transition element 18 is provided with a T-shaped second groove 28 at a back side 27. A transverse flange 29 of the I-shaped cross section of the support member 8,9 is mounted to the transition element 18 by being displaced longitudinally, perpendicularly to the plane of the paper so that the I-shaped cross section extends in the T-shaped groove 28 in the transition element 18. The transition element 18 is thereby kept fixed to the support member 8,9. The covering 10,11, the transition element 18 and the support member 8,9 may be mutually kept fixed, e.g. by a screw bolt as shown in Fig. 2.

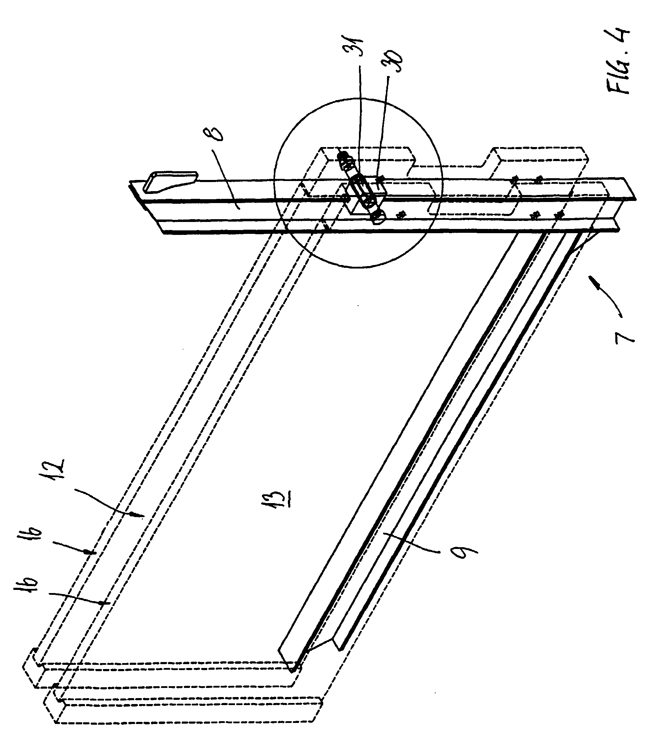

Fig. 4 shows one of plural juxtaposed sections in the plate freezer. The figures shows a fork 7 where the transition element 18 and the covering 10,11 are omitted. The figure shows with stippled line two cooling plates 13 constituting the side coverings of the freezing chamber 12. The fork 7 may, as mentioned previously, be displaced upwards in relation to the cooling plates 13 so that the lower covering (not shown) is at a level with or above the upper edge 16 of the cooling plates 13. By displacing the fork 7 upwards and downwards, the fork 7 is inter alia guided by a fork holder 30 and a guide roller 31 fastened to the chassis of the plate freezer and mounted behind the rear support member 8 on the fork.

Fig. 5 shows the fork holder 30 and the guide roller 31. The fork holder 30 is a block provided with a groove 32. One side of the transverse flange 29 in the I-shaped support member 8 projects into the groove 32. The fork holder 30 is fastened to the chassis by means a screw bolt 33 extending through a hole 34 in the fork holder 30. The guide roller 31 is mounted around the bolt and has an inner diameter d which is a little greater than the diameter D of the screw bolt 33 so that the guide roller 31 may rotate about the bolt 33.

When the fork 7 is displaced upwards and downwards, the transverse flange 29 of the I-shaped cross section of the rear support member 8 be displaced upwards and downwards, respectively, in the groove 32 in the fork holder 30. The fork holder 30 will thereby keep the fork fixed in relation to the chassis in horizontal direction. An upper side 35 of the transverse flange 29 on the I-shaped support member 8 will simultaneously be displaced in relation to the outer side of the guide roller 31. The fork holder 30 and the guide roller 31 are preferably made of a thermally insulating material like plastic so that there is established a further thermal insulation between the support member 8 and the chassis besides the thermal insulation established by means of the transition element 18 between the covering and the support member (see Fig. 3).

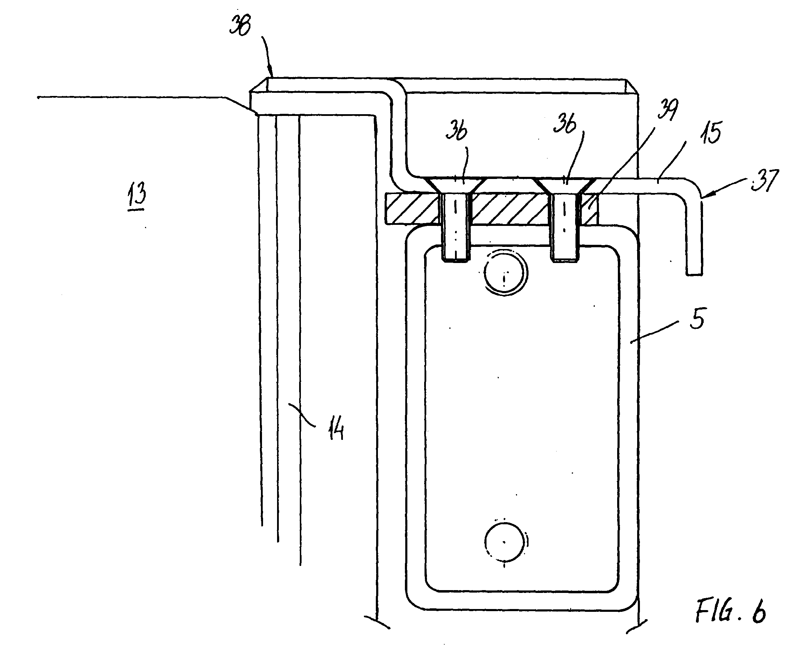

Fig. 6 shows attachment of the edge plate 15 to the upper carrying beam 5 on the chassis. The edge plate 15 is mounted for forming the transition from the lower covering (not shown) where the blocks of frozen fish are to be removed from the plate freezer which occurs when the lower covering is in its lifted position at level with or above the upper edge 16 of the cooling plates 13 constituting the side coverings of the freezing chamber. The edge plate 15 is screwed to the upper carrying beam 5 by means of screw bolts 36. The edge plate 15 extends stepwise and has an outer edge 37 situated at a lower level than an inner edge 38.

Between the upper carrying beam 5 and the edge plate 15 there is provided a plate 39 of a thermally insulating material, preferably plastic. Hereby there is achieved the advantage that the edge plate 15 becomes thermally insulated from the chassis and thus initially has a higher temperature than the chassis. The risk of the toe 40 on the fork (see fig. 2 freezes to the edge plate 15 is thereby considerably reduced when the lower covering 11 is in its lifted position.

The invention is described above with reference to a specific embodiment of a vertical plate freezer. It will be possible to design individual details of the plate freezer in other ways. The thermally insulating materials used are, as mentioned, preferably plastic of the type high density polyethylene (PE-HD) or Etronax® as these materials are allowed for food applications like fish. Etronax® has furthermore the advantage that the coefficient of friction between Etronax® and other materials like water is very small which increases the tendency of water to run off thermally insulating materials made of Etronax®. Furthermore, the material is very durable. It will also be possible to use other thermally insulating materials than plastic in order to achieve the advantage with less risk of ice formation and lessened energy consumption for freezing, which advantages, as mentioned, are common to the details described above.

## Claims

1. Vertical plate freezer comprising a plurality of forks (7) each having rear and lower coverings (10,11) delimiting a freezing chamber (12), the forks (7) capable of being displaced between a lifted position and a lowered position in connection with filling the chamber (12) with foodstuffs for freezing and removing the frozen foodstuffs, the plate freezer also comprising side coverings (13) capable of being displaced mutually sideways in connection with freezing and removing the foodstuffs, where the forks (7) in the lowered position rest on an underlying beam, where a front, lower carrying beam (6) has a contact surface (19), where the forks (7) each have a toe (40) at the front, and where the forks (7) are supported at the front by the toe (40) resting on the contact surface (19) on the carrying beam (6), **characterised** in that the contact surface on the front, lower carrying beam (6) is bevelled so that the contact surface (19) extends from a higher level and downwards to a lower level, that a contact surface (20) on the toe (40) of the forks is bevelled in such a way that the toe (40) extends from a lower level to a higher level, and that the bevelling on the carrying beam and the bevelling on the toe are extending correspondingly.

2. Vertical plate freezer according to claim 1, wherein hydraulic pipes (21) for supplying hydraulic pressure to a number of hydraulic cylinders for displacing the forks (7) extend under the lower covering (11), and that the hydraulic pipes (21) extend immediately under the contact surface (19) on the front, lower carrying beam (6).

3. Vertical plate freezer according to claim 1 or 2, wherein the forks (7) comprise support members (8,9), that at least the lower coverings (11), preferably both the lower covering (11) and the rear coverings (10), are fastened to a support member (8,9) so that they face the freezing chamber (12), that the forks (7) also comprise a transition element (18) disposed between the support member (8,9) and the coverings (10,11) which are fastened to and mutually connected through the transition element (18), and that the transition element (18) is made of a thermally insulating material, preferably plastic, more preferably high density polyethylene (PE-HD).

4. Vertical plate freezer according to claim 3, wherein the contact surface (20) on the toe (40) of the fork (7) is formed on the transition element (18).

5. Vertical plate freezer according to claim 3 or 4, wherein the transition element (18) is provided with two oppositely disposed first grooves (26) facing outwards from the transition element, that the covering (10,11) is provided with two oppositely disposed flanges (24) facing inwards from sides of the covering, and that the flanges (24) on the covering engage the first grooves (26) in the transition element.

6. Vertical plate freezer according to any of claims 3 - 5, wherein the transition element (18) is provided with a substantially T-shaped second groove (28) facing outwards at a rear side of the transition element, that the support member (8,9) has an I-shaped, alternatively a T-shaped cross section, and that the transverse flange in the support member engages the transverse part of the T-shaped second groove (28) in the transition element.

7. Vertical plate freezer according to any preceding claim, wherein the contact surface (19) on the front carrying beam (6) is made of a thermally insulating material, preferably plastic, more preferably Etronax® or high density polyethylene (PE-HD).

8. Vertical plate freezer according to any preceding claim, wherein the forks (7) comprises a rear support member (8) having an I-shaped or a T-shaped cross section, that a fork holder (30) is fastened to a chassis of the plate freezer, that the fork holder is provided with a groove (32), and that one part of the transverse flange on the I-shaped or T-shaped cross section of the rear support member (8) engages the groove (32) in the fork holder (30).
